(19) Europäisches Patentamt

European Patent Office

Office européen des brevets

(11) **EP 4 773 489 A1**

(12) **EUROPEAN PATENT APPLICATION**

(43) Date of publication:
08.07.2026 Bulletin 2026/28

(21) Application number: 25150581.4

(22) Date of filing: 07.01.2025

(51) International Patent Classification (IPC):
*H02M 1/00* (2006.01)  *H02M 1/36* (2007.01)
*H02M 1/32* (2007.01)

(52) Cooperative Patent Classification (CPC):
**H02M 1/36; H02M 1/0006; H02M 1/0045;**
**H02M 1/0096;** H02M 1/007; H02M 1/32

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **E-peas**
**1348 Ottignies-Louvain-la-Neuve (BE)**

(72) Inventors:
• **MARAFKO, Oscar**
  **Bruxelles (BE)**
• **DE VOS, Julien**
  **Perwez (BE)**
• **DAMIEN, Bruno**
  **Rochefort (FR)**

(74) Representative: **Gevers Patents**
**De Kleetlaan 7A**
**1831 Diegem (BE)**

(54) **APPARATUS AND METHOD FOR ACCELERATING A COLD-START OF A CIRCUIT FOR MANAGING INPUT POWER FROM AN ENERGY HARVESTER**

(57) The present invention relates to a method and apparatus for accelerating a cold-start of a power management circuit (PMC) (1) for managing an input power from an energy harvester (2). The PMC (1) comprises: a main voltage converter (6) for converting input power from the energy harvester (2) into a load output power, a controller (7) for controlling the main voltage converter (6) and operable if supplied by a supply voltage Vint of at least Vint_min (Vint ≥ Vint_min), a biasing circuit for converting part of the input power from the energy harvester (2) and supplying power to the controller (7) at least when Vint = Vint_min, a step-down voltage converter (10) configured for converting energy supplied by the energy harvester at a voltage Vin and for supplying power to the controller (7) if and only if Vin ≥ Vint and Vint ≤ Vint_min. Upon starting to receive energy from the energy harvester (2), the PMC (1) is configured such that: i) while Vint ≤ Vint_min, the step-down voltage converter (10) supplies power to the controller (7) such that Vint increases up to Vint_min; and ii) upon Vint reaches Vint_min, the step-down voltage converter (10) interrupts the supply of power to the controller (7), and the biasing circuit supplies power to the controller (7).

*Fig. 1*

EP 4 773 489 A1

**Description**

**Field of the invention**

The invention relates to a method and device for accelerating the cold-start of a power management circuit (PMC), preferably a power management integrated circuit (PMIC), for managing input power received from an energy harvester.

**Background of the invention**

The use of PMC comprising voltage converters for extracting energy from an energy harvester and supplying the harvested energy to a load are well known in the art. For example, the load is or comprises a rechargeable storage device, such as a rechargeable battery, preferably a Li-ion battery, or such as a supercapacitor or a conventional capacitor. For example, the load is or comprises any type of application load such as portable devices, sensors, external circuits, or wireless transmitters.

A variety of energy harvesters can be used as energy sources such as for example photovoltaic cells (PV), thermoelectric generators (TEG), piezoelectric energy generators and electromagnetic energy sources.

Typically, the PMC is an integrated circuit (PMIC) for energy harvesting and comprises a main voltage converter comprising one or more voltage converters such as a boost, a buck or a buck-boost DC-DC voltage converter. The operation of the main voltage converter is controlled by a controller. The controller requires a supply voltage for operating, for example a supply voltage of 2.5 V, 3.3 V or 5 V.

Some PMC comprise, in addition to the main voltage converter system, a cold-start voltage converter to start acquiring energy from the energy harvester without the use of the main voltage converter system. The cold-start voltage converter allows to start up the PMC when it is in a powered-off state or, in other words, when the components of the PMC are empty or depleted of energy, and thus avoids the need of a dedicated power source for the PMC to start operating. Typically, the cold-start voltage converter has a supply input connected to the energy harvester and a supply output connected to the power input node of the controller, for supplying the power at the supply voltage required by the controller to operate. The cold-start voltage converter is typically configured for supplying power to the controller at a supply voltage constant in time (steady) and equal to a bias voltage of the PMC.

The cold-start voltage converter, for instance comprising a charge pump, is a self-starting voltage converter configured to start operating when an input voltage at the input of the cold-start voltage converter is above a minimum threshold value. The PMIC known under reference AEM00330 and provided by e-peas S.A. Belgium, comprises for example a cold-start voltage converter that typically starts to operate at an input voltage as low as 275 mV and with an input power of at least 3 microwatts ($\mu$W).

A response or delay time of a cold-start voltage converter may be defined as a time duration Dt = Tb - Ta separating:

- a time Ta when a voltage step of a predetermined voltage amplitude (above said minimum threshold value of the input voltage of the cold-start converter) is applied to the supply input of the cold-start voltage converter, and
- a time Tb when a supply voltage at the supply output of the cold-start voltage converter reaches another predetermined voltage amplitude, for example a minimum value of the biasing voltage required for the controller to start operating.

The response time of the cold-start voltage converter delays the start-up of the controller that controls the main voltage converter. As a result, the main voltage converter cannot start converting and supplying power to the load as soon as energy is generated by the energy harvester.

A detrimental effect of the response time of the cold-start voltage converter is to reduce the amount of energy supplied to the load. During the cold-start, the input power available from the energy harvester is not converted by the main voltage converter, and is lost. This lost energy drastically reduces the overall energy supplied to the load in cases where most of the input energy generated by the energy harvester is generated over a comparatively short duration compared with the response time Dt of the cold-start voltage converter.

Hence, there is a need for increasing the amount of energy supplied to the load by the PMC. In particular, there is a need for such PMC being an integrated circuit.

**Summary of the invention**

An object of the present invention is to increase the amount of energy supplied to the load by the same PMC.

According to a first aspect, the invention provides a power management circuit (PMC), preferably a power management integrated circuit (PMIC), for managing an input power from an energy harvester and comprising:

- an power input node for receiving the input power from the energy harvester,
- a load node connectable to a load,
- a main voltage converter having a power input node for receiving a first portion of the input power from the energy harvester, and configured for converting the first portion of the input power at a voltage Vin1 of the power input node of the main voltage converter into a first portion of a load output power at a voltage Vload supplied to the load node, the main voltage converter being configured for converting the first portion of the input power at the voltage Vin1 into the first portion of the load output power at the voltage Vload when Vin1 ≥ VLoad and/or when Vin1 < VLoad,

- a controller configured for controlling the main voltage converter, wherein the controller is operable for controlling the main voltage converter if a supply voltage Vint at a power input node of the controller is equal or above a minimum required supply voltage Vint_min (Vint ≥ Vint_min),
- a biasing circuit operable for converting part of the input power from the energy harvester into part of a controller input power at the voltage Vint supplied to the power input node of the controller at least when Vint = Vint_min,

  characterized in that the PMC comprises:

- a step-down voltage converter, distinct from the main voltage converter and from the biasing circuit, and having a power input node for receiving a second portion of the input power from the energy harvester, the step-down voltage converter being configured for converting the second portion of the input power at a voltage Vin2 of the power input node of the step-down voltage converter into a first portion of the controller input power at the voltage Vint supplied to the power input node of the controller if and only if Vin2 ≥ Vint and Vint ≤ Vint_min,

  and in that the PMC is configured for, if Vint ≥ Vint_min :

- interrupting the supply of the first portion of the controller input power to the controller, and
- operating the biasing circuit of the PMC to supply the second portion of the controller input power to the controller.

In the field of electronics, faster/more powerful circuits generate more power losses and/or are more expensive. With the above features, the PMC of the invention allows for using faster/more powerful, albeit less energy efficient, components for implementing the cold-start function of the PMC. This maximizes the overall amount of harvested energy that is absorbed and supplied to the load by the PMC for the following reasons.

In the PMC of the invention, the step-down voltage converter is configured for supplying the first portion of the controller input power at the supply voltage Vint to the power input node of the controller until Vint reaches Vint_min. When Vint reaches Vint_min, the controller starts operating (i.e., controlling the main voltage converter), and the step-down voltage converter is disabled (i.e., deactivated) and stops supplying the first portion of the controller input power to the controller. Therefore, the step-down voltage converter is only used during the cold-start phase of the PMC and not thereafter.

In the present application, the cold-start phase of the PMC refers to the time duration comprised between the start of the supply of power by the energy harvester connected to the PMC and the time when the supply voltage Vint reaches the minimum required supply voltage Vint_min.

Due to the lower energy efficiency of the step-down voltage converter, the energy efficiency of the cold-start phase of the PMC is reduced. However, thanks to the faster/more powerful step-down voltage converter, the PMC of the invention has a shorter cold-start phase. As a result, the main voltage converter starts absorbing and converting the input power available from the energy harvester earlier. The additional energy supplied to the load thanks to the earlier start of the operation of the main voltage converter is comparatively much greater than the increase in energy losses caused by the use of the less energy efficient step-down voltage converter during the cold-start phase. As a result, the output power supplied to the load is increased with the invention.

The PMC of the invention may be implemented as a discrete or integrated circuit. Preferably, the PMC of the invention is an integrated circuit i.e., a power management integrated circuit (PMIC). The PMIC of the invention may thus be an integrated monolithic semiconductor.

The step-down voltage converter is configured for converting power only if the voltage Vin2 at its power input node is greater than its output voltage Vint.

Step-down voltage converters are more powerful but less efficient than conventional cold-start circuits (e.g. comprising a charge pump). Step-down voltage converters also take much less silicon area when implemented in an integrated circuit than conventional cold-start circuits (e.g. comprising a charge pump).

The PMC according to the invention is particularly advantageous for managing an input power that is pulsed.

'Pulsed' means that the energy harvester generates the input power during short time periods that are separated by comparatively long time periods without generating input power. For example, the short time periods have a duration comprised between 1ms and 100ms, preferably between 2ms and 20ms, more preferably between 3ms and 10ms. For example, the long time periods have a duration are between 1 second and 1 month. For example, the long time periods have a duration of at least 5, preferably at least 100 times the short time periods. Such pulsed input power causes the PMC to power off between each pulse of power to avoid energy losses. As a result, the PMC must cold-start i.e., start operating from a powered-off state wherein it is depleted of energy, each time a new pulse occurs. When harvesting pulsed input power, the cold-start phases thus represent a significant fraction of the total operating time of the PMC. As a result, the energy efficiency of the PMC during the cold-start phase has a significant impact on the overall efficiency of the energy harvesting system.

The PMC according to the invention is particularly advantageous for managing a pulsed input power such that an amplitude of the voltage of the pulse at the start of the pulse is greater than the minimum required supply voltage Vint_min of the controller.

The PMC according to the invention is also advantageous in applications requiring fast response time of the energy harvesting system. In PMC's, the response time of the cold-start voltage converter induces a lag between the event triggering the generation of energy by the energy harvester and the reception of energy by the load. For example, such a lag may occur between pressing a device 'ON' button by a user and the start-up of the device, which is inconvenient for the user. With the PMC of the invention having a reduced duration of the PMC cold-start phase, user experience is enhanced.

The PMC is configured for managing an input power from an energy harvester such as photovoltaic cells (PV), thermoelectric generators (TEG), piezoelectric energy generators or electromagnetic energy sources. Preferably, the PMC of the invention is configured for managing the input power received from a kinetic harvester, or a magneto harvester. The PMC of the invention is particularly advantageous for managing the input power received from electromagnetic energy harvesters based on the interaction between one or more permanent magnets and one or more coils. Typically, this kind of energy harvester generate pulsed input power at an oscillating voltage wherein the amplitude of the voltage oscillations decrease with time. In such case, most of the energy of each pulse of input power is comprised in the first voltage oscillations of the pulse. The subsequent voltage oscillations have a lower amplitude and thus comprise less power. Cold-starting the PMC early is thus critical for harvesting the first, and more powerful, oscillations of the pulses.

The PMC comprises an power input node connectable to the energy harvester. The power input node may be connected to the energy harvester directly or through a power conditioning circuit such as a rectifier. The power conditioning circuit may be part of the PMC or PMIC, or may be a separate device, or may be coupled to the energy harvester to form a single device.

Preferably, the power conditioning circuit is a rectifier. This allows for providing voltage having a single polarity to the PMC even if the voltage of the energy harvester takes different polarities over time. For example, this is the case if the energy harvester produces an oscillating voltage. More preferably, the rectifier is an active rectifier (i.e., not a diode rectifier), which is more energy efficient and allows a faster operation of the PMC.

In most cases, the voltage of the input power is variable in time i.e., not constant. For example, the PMC is configured for receiving input power under a voltage comprised between -100V and 100V (or 0V and 100V if the voltage is rectified by the rectifier), preferably between -30V and 30V (or 0V and 30V if the voltage is rectified by the rectifier), more preferably between -10 and 10V (or 0V and 10V if the voltage is rectified by the rectifier).

For example, the duration of each pulse of input power from the energy harvester is comprised between 1 ms and 100ms, preferably between 2ms and 20ms, more preferably between 3ms and 10ms.

The PMC comprises a load node connectable to a load. For example, the load is or comprises a rechargeable storage device, such as a rechargeable battery, preferably a Li-ion battery, or such as a supercapacitor or a conventional capacitor. The load consumes electrical power supplied by the PMC. For example, the load is or comprises any type of application load such as portable devices, sensors, external circuits, wireless transmitters. Preferably, the load is an application circuit such as a wireless transmitter. In most cases, the load requires a constant voltage for operating. For example, this may be the biasing voltage of an electrical circuit, or the voltage of a battery.

The input power supplied by the energy harvester is used by different parts of the PMC. In other words, different portions of the input power from the energy harvester are used by corresponding parts of the PMC.

A first portion of the input power received from the energy harvester is converted by the main voltage converter into a first portion of the load output power. The main voltage converter has a power input node connectable to the energy harvester, preferably through the power input node of the energy harvester, for receiving the first portion of the input power. The voltage at the power input node of the main voltage converter is Vin1. The main voltage converter has a power output node connected to the load node of the PMC. The main voltage converter is configured for supplying the first portion of the load output power at a voltage Vload to the load through the load node. Preferably, the PMC is configured for regulating the voltage Vload such that Vload is steady. For example, the voltage Vload is comprised between 0.5V and 4.5V, preferably between 1V and 4V, more preferably between 1V and 3V.

The main voltage converter may comprise one or more voltage converters such as a DC-DC voltage converter, preferably a boost, a buck or a buck-boost DC-DC voltage converter. Preferably, the main voltage converter comprises at least a buck-boost DC-DC voltage converter for converting the first portion of the input power into the first portion of the load output power.

The main voltage converter is operable for converting the first portion of the input power into the first portion of the load output power when the voltage Vin1 at the power input node of the main voltage converter is greater than the voltage Vload at the power output node of the main voltage converter (Vin1 $\geq$ VLoad) and/or when the voltage Vin1 lower than the voltage Vload (Vin1 < VLoad), preferably in both case when Vin1 $\geq$ VLoad and when Vin1 < VLoad.

The main voltage converter is connected to a controller of the PMC. The main voltage converter is controlled by the controller. For example, the controller is configured for controlling the main voltage converter such that the voltage Vload is equal to a preset value required by the load.

The voltage Vint is a bias voltage of the controller. The controller requires a non-zero voltage at its power input node for operating and controlling the main voltage converter. The controller starts controlling the main voltage converter at least when Vint is above the minimum required supply voltage Vint_min. Possibly, the controller also starts controlling the main voltage converter when Vint is lower than Vint_min by less than a predefined voltage difference. However, the controller cannot start operating and controlling the main voltage converter when Vint is null.

The controller is configured to start operating when Vint reaches Vint_min, preferably if and only if Vint $\geq$ Vint_min. In the latter case, the controller must be supplied with power at a supply voltage Vint of at least Vint_min to operate (i.e., to control the main voltage converter).

For example, Vint_min is comprised between 0.5V and 50V, preferably between 1V and 5V, more preferably between 2V and 4V. For example, Vint_min is equal to 1.2V, 1.8V, 2.0V, 2.2V, 2.5V, or 2.8V.

The controller of the PMC may also be configured for controlling other functional blocks of the PMC. In an example, the PMC comprises a maximum power point tracking (MPPT) circuit, preferably controlled by the controller, and configured for optimizing an operation of the main voltage converter.

Preferably, the voltage Vint is also a bias voltage of the PMC i.e., of the main voltage converter, and optionally of the MPPT circuit. Vint may also be referred to as the voltage of the internal bias nodes of the PMC.

The PMC of the invention comprises a biasing circuit configured for receiving and for converting part, i.e. a portion, of the input power from the energy harvester into part, i.e. a portion, of the controller input power. The biasing circuit is configured for supplying the part of the controller input power at the voltage Vint and to the power input node of the controller. The biasing circuit is configured for converting the part of the input power from the energy harvester into the part of the controller input power at least when Vint = Vint_min. In this way, the biasing circuit is configured for providing power to the controller when the step-down voltage converter is not supplying power to the controller. In an embodiment, the biasing circuit is configured for

Preferably, the biasing circuit is configured for regulating the voltage Vint such that Vint $\geq$ Vint_min, preferably such that Vint = Vint_min. This allows the controller to control the main voltage converter after deactivation of the step-down voltage converter.

The biasing circuit has a power input node for receiving the part of the input power from the energy harvester. The power input node of the biasing circuit is connectable to the energy harvester, preferably through the power input node of the energy harvester. The biasing circuit has a power output node for supplying the part of the controller input power. The power output node of the biasing circuit is at the voltage Vint and is connected to the controller.

In an embodiment of the invention, the biasing circuit is distinct, i.e. separate from the main voltage converter, or is the main voltage converter.

The PMC comprises a step-down voltage converter. The step-down voltage converter is distinct, i.e. a separate entity, from the main voltage converter. The step-down voltage converter is also distinct, i.e. a separate entity, from the biasing circuit.

The step-down voltage converter has a power input node connectable to the energy harvester, preferably via the power input node of the PMC. The power input node of the step-down voltage converter has a voltage Vin2 and is configured for receiving the second portion of the input power received from the energy harvester. The step-down voltage converter has a power output node connected to the power input node of the controller. The power output node of the step-down voltage converter has the voltage Vint. Upon receiving energy from the energy harvester, the step-down voltage converter starts consuming the second portion of the input power supplied by the energy harvester and converting it into the first portion of the controller input power.

The step-down voltage converter is a 'step-down only' voltage converter, such that it can convert the second portion of the input power at the voltage Vin2 of the power input node of the step-down voltage converter into the first portion of the controller input power at the voltage Vint supplied to the power input node of the controller if only if Vin2 $\geq$ Vint and not when Vin2 < Vint.

The step-down voltage converter is configured for supplying the first portion of the controller input power to the controller such that the voltage Vint increases (for example from 0V when the PMC is depleted of energy) up to Vint_min. This enables the controller to start controlling the main voltage converter.

The step-down voltage converter is a cold-start step-down voltage converter in that is can start operating from a powered-off state i.e., when depleted of energy. Preferably, the step-down voltage converter is a high-current step-down voltage converter i.e., configured to provide a current comprised between $1\mu A$ and 1A, preferably between $100\mu A$ and 100mA to the power input node of the controller. This allows for charging the circuits (e.g., capacitors) connected to the power input node of the controller faster than with the prior art cold-start voltage converter.

In an embodiment, the step-down voltage converter is configured for, upon receiving the second portion of the input power from the energy harvester, supplying the first portion of the controller input power to the power input node of the controller such that Vint increases up to Vint_min.

The step-down voltage converter is configured for receiving the second portion of the input power and supplying the first portion of the controller input power if and only if Vint $\leq$ Vint_min. The PMC, preferably the step-down voltage converter itself, is configured such that the step-down voltage converter stops converting power when Vint reaches Vint_min. In other words, upon Vint reaches Vint_min, the step-down voltage converter is deactivated, stops absorbing the second portion of the input power, and stops supplying the first portion of the controller input power to the controller. Preferably, such deactivation of the step-down voltage converter occurs immediately after Vint reaches Vint_min. Alternatively, such deactivation of the step-down voltage converter occurs within less than 50ms, preferably less than 20 ms, more preferably less than 1 ms.

In the PMC, the biasing circuit is configured for converting part of the input power from the energy harvester into part of a controller input power at the voltage Vint supplied to the power input node of the controller, at least when Vint = Vint_min. In this way, the biasing circuit is configured for providing power to the controller when the supply of the second portion of the controller input power by the step-down voltage converter is interrupted. The biasing circuit is configured for regulating the voltage Vint such that Vint $\geq$ Vint_min. This allows the controller to control the main voltage converter after deactivation of the step-down voltage converter.

In an embodiment of the invention, the biasing circuit is configured for converting part of the input power from the energy harvester into part of a controller input power at the voltage Vint supplied to the power input node of the controller also when Vint < Vint_min and/or also when Vint > Vint_min.

In an embodiment of the invention, the biasing circuit is a cold-start voltage converter, distinct from the main voltage converter, and having a power input node for receiving a third portion of the input power from the energy harvester, the cold-start voltage converter being configured for converting the third portion of the input power at a voltage Vin3 of the power input node of the cold-start voltage converter into a second portion of the controller input power at the voltage Vint supplied to the power input node of the controller.

Preferably, the cold-start voltage converter is configured for regulating the voltage Vint such that Vint = Vint_min. This means that the PMC is configured for adjusting (i.e., controlling) Vint such that it tends towards Vint_min over time.

The PMC comprises a cold-start voltage converter configured for converting a third portion of the input power received from the energy harvester into a second portion of the controller input power. The third portion of the input power is received through the power input node of the cold-start voltage converter which has a voltage Vin3. The second portion of the controller input power is supplied through the power output node of the cold-start voltage converter that is connected to the power input node of the controller and thus has a voltage Vint.

The cold-start voltage converter has a power input node configured for receiving the third portion of the input power from the energy harvester. The power input node of the cold-start voltage converter is connectable to the energy harvester, preferably via the power input node of the PMC, and has a voltage Vin3. The cold-start voltage converter has a power output node connected to the power input node of the controller, for supplying the second portion of the controller input power to the controller at a voltage Vint.

The cold-start voltage converter is operable for converting the third portion of the input power received from the energy harvester into the second portion of the controller input power and supplies the second portion of the controller input power to the power input node of the controller at least when Vint = Vint_min, and preferably also when Vint < Vint_min. In the latter case, the PMC is preferably configured such that the cold-start voltage converter supplies the second portion of the controller input power to the controller when Vint < Vint_min.

Preferably, the cold-start voltage converter is operable for converting the third portion of the input power into the second portion of the controller input power supplied to the power input node of the controller if Vint $\leq$ Vint_min and Vin3 $\leq$ Vint, preferably if Vint $\leq$ Vint_min and Vin3 < Vint. This allows for supplying power to the controller when Vin3 < Vint, and thus for increasing Vint up to Vint_min even when the voltage at the power input node of the PMC is lower than Vint_min. As a result, the PMC including the controller and the main voltage converter can start operating even when the voltage supplied by the energy harvester is lower than Vint_min. This is not possible with the step-down voltage converter alone.

In an embodiment, the cold-start voltage converter is operable for converting the third portion of the input power into the second portion of the controller input power supplied to the power input node of the controller also if Vint $\geq$ Vint_min and/or also if Vin3 $\geq$ Vint.

Preferably, the cold-start voltage converter and the step-down voltage converter are configured such that, when Vin3 = Vin2, the first portion of the controller input power is greater than the second portion of the controller input power. In other words, under the condition that Vin3 is equal to Vin2, the step-down voltage converter can supply more power to the controller than the cold-start voltage converter. Preferably, the cold-start voltage converter and the step-down voltage converter are configured such that the first portion of the controller input power is greater than the second portion of the controller input power, under the condition that Vin3 = Vin2, and for each value of Vin2 comprised in the range [0.1*Vint_min, 0.9*Vint_min], but not necessarily for other values of Vin2.

Preferably, the cold-start voltage converter and the step-down voltage converter are configured such that, when Vin3 = Vin2, a ratio of the first portion of the controller input power to the second portion of the input power is less than a ratio of the second portion of the controller input power to the third portion of the input power. This means that the cold-start voltage converter has a higher power conversion efficiency than the step-down voltage converter. Preferably, the cold-start voltage converter and the step-down voltage converter are configured such that a ratio of the first portion of the controller input power to the second portion of the input power is less than a ratio of the second portion of the controller input power to the third portion of the input power, under the condition that Vin3 = Vin2, and for each value of Vin2 comprised in the range [0.1 *Vint_min, 0.9*Vint_min], but not necessarily for other values of Vin2.

The cold-start voltage converter is primarily configured for converting power with a high efficiency, not for supplying a high power. The second portion of the controller input power supplied by the cold-start voltage converter is sufficient for powering the controller in a standard operation mode. However, during a cold-start, charging the PMC circuits connected to the power input node of the controller such that Vint increases from 0V to Vint_min requires a significant amount of energy and time due to the limited second portion of the controller input power. This induces a time delay during which the controller and the main voltage converter cannot operate. The invention aims at solving this problem by using a step-down voltage converter separate from the cold-start voltage converter, and configured for supplying a high, albeit less efficiently converted, power to charge the PMC circuits connected to the power input node of the controller such that Vint increases from 0V to Vint_min faster.

Preferably, the power output supply of the step-down voltage converter and the power output supply of the cold-start voltage converter are connected to the power input node of the controller such that they always have the same voltage Vint.

In an embodiment of the PMC, if the second and third portions of the input power are equal, the conversion of the third portion of the input power into the second portion of the controller input power by the cold-start voltage converter has a higher efficiency than the conversion of the second portion of the input power into the first portion of the controller input power by the step-down voltage converter. This means that, under similar operating conditions (same input voltage, same output voltage, same input power), the cold-start voltage converter generates fewer losses than the step-down voltage converter.

The similarities and differences between the cold-start voltage converter and the step-down voltage converter may comprise any combination of the following:

- Both are configured for supplying power (referred to in this application as the first and second portion of the controller input power) to the power input node of the controller.
- Under the same voltages at their respective input and the same voltages at their respective outputs, the cold-start voltage converter can convert less power but with a higher energy efficiency than the step-down voltage converter. In other words, under the same voltages at their respective input and the same voltages at their respective outputs, the cold-start voltage converter can supply less current to the power input node of the controller but generates fewer losses per watt of power supplied to the power input node of the controller than the step-down voltage converter.

In an embodiment of the PMC:

- if the step-down voltage converter is not supplying the first portion of the controller input power to the power input node of the controller: a first response time Dt1 is taken by the voltage Vint to rise from 0V to Vint_min when the cold-start voltage converter starts converting the third portion of the input power received from the energy harvester into the second portion of the controller input power in response to an application of a predetermined voltage Vin_min at the power input node of the cold-start voltage converter in a powered-off state,
- if the cold-start voltage converter is not supplying the second portion of the controller input power to the power input node of the controller, a second response time Dt2 is taken by the voltage Vint to rise from 0V to Vint_min when the step-down voltage converter starts converting the second portion of the input power from the energy harvester into the first portion of the controller input power in response to an application of the predetermined voltage Vin_min at the supply input of the step-down voltage converter in a powered-off state, and
- Dt1 > Dt2.

The first response time Dt1 is preferably measured as follows. The step-down voltage converter is prevented from supplying the first portion of the controller input power to the controller, for example by disconnecting the power input node of the step-down voltage converter from the power input node of the PMC and/or by disconnecting the power output node of the step-down voltage converter from the power input node of the controller. As a result, during a cold-start of the PMC, only the cold-start voltage converter supplies power to the power input node of the controller. At a time Tstart1, while the cold-start voltage converter (and/or the entire PMC) is in a powered-off state, a voltage step of an amplitude Vin_min is applied to the power input node of the cold-start voltage converter. Then, the cold-start voltage converter starts converting power received through its power input node at the voltage Vin_min and supplying the converted power to the power input node of the controller such that Vint rises until Vint reaches Vint_min at a time Tend1. Then, the first response time Dt1 is calculated as Dt1 = Tend1 - Tstart1.

Similarly, the second response time Dt2 is preferably measured as follows. The cold-start voltage converter is prevented from supplying the second portion of the controller input power, for example by disconnecting the power input node of the cold-start voltage converter from the power input node of the PMC and/or by disconnecting the power output node of the cold-start voltage converter from the power input node of the controller. As a result, during a cold-start of the PMC, only the step-down voltage converter supplies power to the power input node of the controller. At a time Tstart2, while the step-down voltage converter (and/or the entire PMC) is in a powered-off state, the voltage step of the amplitude Vin_min is applied to the power input node of the step-down voltage converter. Then, the step-down voltage converter starts converting power received at its power input node at the voltage Vin_min and supplying the converted power to the power input node of the controller such that Vint rises until Vint reaches Vint_min at a time Tend2. Then, the second response time Dt2 is calculated as Dt2 = Tend2 - Tstart2.

For example, Vin_min is comprised between 0.5V and 100V, preferably between 0.5V and 30V, more preferably between 0.5V and 10V. For example, Vin_min = 0.5*Vint_min or Vin_min = 2*Vint_min.

Preferably, Dt1 > Dt2 + $\Delta$, wherein $\Delta$ is equal to 1 ms, preferably equal to 5ms, more preferably equal to 10ms.

The PMC is configured such that, upon starting to receive the second portion of the input power from the energy harvester, the step-down voltage converter starts converting the second portion of the input power into the first portion of the controller input power. In other words, the PMC is configured such that the step-down voltage converter supplies the first portion of the controller input power to the controller when Vint < Vint_min. The step-down voltage converter thus charges the circuits connected to the power input node of the controller as long as the value of Vint does not permit operation of the controller.

To reduce the negative impact of the low efficiency of the power conversion by the step-down voltage converter, the PMC is configured such that the step-down voltage converter stops operating upon Vint reaches Vint_min. In other words, the PMC is configured for, upon Vint reaches Vint_min, interrupting: i) the absorption of the second portion of the input power from the energy harvester by the step-down voltage converter, and ii) the conversion of the second portion of the input power from the energy harvester into the first portion of the controller input power supplied to the controller.

When Vint $\geq$ Vint_min, the controller is thus supplied by power received from the highly energy efficient biasing circuit, such as the cold-start voltage converter, not from the step-down voltage converter. This enhances the energy efficiency of the PMC.

In an embodiment, the biasing circuit is the main voltage converter, and the main voltage converter is configured for converting a fourth portion of the input power at the voltage Vin1 of the power input node of the main voltage converter into a third portion of the controller input power at the voltage Vint supplied to the power input node of the controller when Vin1 $\leq$ Vint and/or when Vin1 $\geq$ Vint. Preferably, the main voltage converter is configured for regulating Vint such that Vint = Vint_min.

The main voltage converter has another power output node connected to the power input node of the controller, for supplying the third portion of the controller input power at the voltage Vint to the controller.

In this embodiment, the main voltage converter is further configured for supplying the third portion of the controller input power to the controller. Preferably, the main voltage converter is configured for converting the fourth portion of the input power at the voltage Vin1 into the third portion of the controller input power at the voltage Vint when Vin1 $\leq$ Vint and/or when Vin1 $\geq$ Vint i.e., when the voltage Vin1 at the power input node of the main voltage converter is lower than Vint and/or when the voltage Vin1 at the power input node of the main voltage converter is greater than Vint.

In an embodiment of the invention, the PMC comprises the cold-start voltage converter and further comprises the main voltage converter configured for converting a fourth portion of the input power at the voltage Vin1 of the power input node of the main voltage converter into a third portion of the controller input power at the voltage Vint supplied to the power input node of the controller when Vin1 $\leq$ Vint and/or when Vin1 $\geq$ Vint, the main voltage converter being preferably configured for regulating Vint such that Vint = Vint_min.

In this embodiment, the PMC is configured for, upon the main voltage converter starts converting the fourth portion of the input power into the third portion of the controller input power:

- interrupting the supply of the first portion of the controller input power to the controller by the step-down voltage converter, and
- interrupting the supply of the second portion of the controller input power to the controller by the cold-start voltage converter.

In this embodiment, the PMC comprises both the cold-start voltage converter and the main voltage converter described above and configured for supplying the third portion of the controller input power to the controller. In this embodiment, the step-down voltage converter, and preferably the cold-start voltage converter, are operating upon reception of the input power from the energy harvester. As a result, Vint rises up to Vint_min. At this time, the controller and thus the main voltage converter are not operating yet. Once Vint reaches Vint_min, the step-down voltage converter is deactivated to improve energy efficiency, whereas the cold-start voltage converter keeps operating and supplying the second portion of the controller input power to the controller. This allows to start up the controller and the main voltage converter. Once in operation, the main voltage converter supplies the third portion of the controller input power to the controller such that the supply of the second portion of the controller input power is no longer needed and is interrupted.

For example, the step-down voltage converter comprises a voltage regulator for supplying a steady voltage Vint.

In a preferred embodiment, the step-down voltage converter comprises or is a low-dropout (LDO) regulator configured for supplying the first portion of the controller input power at the voltage Vint. LDO's have short response time and can provide high output currents despite their low energy efficiency. In addition, LDO's may be implemented in integrated circuit. Lastly, LDO's may be implemented at reasonable costs and within a small silicon surface.

Preferably, the LDO is configured for interrupting the supply of the first portion of the controller input power when the voltage Vint reaches Vint_min. This protects the circuits connected to the power input node of the controller from overvoltage's.

Preferably, the LDO is configured for automatically switching out-of-operation when Vint reaches Vint_min. This is caused by the high impedance of the power input node of the controller when Vint = Vint_min, which causes the LDO output current to drop sharply such that the LDO switches out-of-operation on its own.

When used in combination with an energy harvester supplying pulsed input power at an oscillating voltage, such that each pulse of input power comprises a plurality of voltage oscillations, the PMC is preferably configured such that the cold-start phase of the PMC has a duration inferior to a pseudo-period of the voltage oscillations of the energy harvester.

Preferably, the PMC further comprises an input circuit comprising:

- the power input node of the PMC,
- a first buffer node connected to a first integrated on-chip capacitor or connectable to a first auxiliary rechargeable energy storage device, the first buffer node being connected to:

  ○ the power input node of the PMC through a first unidirectional conducting device, and
  ○ the power input node of the step-down voltage converter,

- the first unidirectional conducting device, preferably a first ideal diode, configured for preventing current from flowing from the first buffer node to the power input node and for allowing current to flow from the power input node to the first buffer node.

Preferably, the first buffer node is also connected to the power input node of the cold-start voltage converter and/or to the power input node of the main voltage converter.

When the energy harvester is connected to the power input node of the PMC, the first integrated on-chip capacitor or the first auxiliary rechargeable energy storage device are connected in parallel with the energy harvester. This allows for buffering some of the input energy supplied by the energy harvester in the first integrated on chip-capacitor or in the first auxiliary rechargeable energy storage device. In this way, a non-zero voltage is maintained at the power input nodes of the step-down voltage converter (and preferably of the cold-start voltage converter) during the cold-start phase, even when the voltage at the power input node of the PMC is null as it decreases between two oscillations (or voltage peaks) of a pulse of input power.

The first unidirectional conducting device prevents current back-flows from the first buffer node to the power input node of the PMC (and to the rectifier and/or energy harvester). For example, such back-flow current may be supplied by the first integrated on-chip capacitor or the first auxiliary rechargeable energy storage device. Such back-flow currents may harm the rectifier and/or the energy harvester. For example, the first unidirectional conducting device prevents energy from reflecting to the harvester when the amplitude of the oscillating voltage from the energy harvester (and optionally rectified by the rectifier) is decaying.

Preferably, the input circuit further comprises a Zener diode connected to the first buffer node. The Zener diode is connected in parallel with the first integrated on-chip capacitor, or connectable in parallel with the first auxiliary rechargeable energy storage device. The Zener diode protects the PMC circuits from voltage surges, e.g., caused by the energy harvester. Preferably, the Zener diode has a 5V threshold.

In an embodiment, the PMC comprises:

- a second buffer node connected to a second integrated on-chip capacitor or connectable to a second auxiliary rechargeable energy storage device, the main voltage converter being operable for converting power received from the second buffer node into a second portion of the load output power at the voltage Vload supplied to the load node,
- a second unidirectional conducting device, preferably a second ideal diode, having a first terminal connected to the second buffer node and a second terminal connected to the power input node of the PMC,

and the second unidirectional conducting device is configured for preventing current from flowing from the first to the second terminal of the second unidirectional conducting device, and for allowing current to flow from the second to the first terminal of the second unidirectional conducting device.

When the PMC comprises the input circuit, the second terminal of the second unidirectional conducting device is preferably connected to the power input node of the PMC through the first buffer node. In this way, a fifth portion of the input power is received by the second buffer node via the first buffer node.

When the energy harvester is connected to the power input node of the PMC, the second integrated on-chip capacitor or the second auxiliary rechargeable energy storage device are connected in parallel with the energy harvester. This allows for buffering a fifth portion of the input power from the energy harvester in the second integrated on chip-capacitor or in the second auxiliary rechargeable energy storage device.

Thanks to the second unidirectional conducting device, the fifth portion of the input power from the energy harvester is stored in the second integrated on-chip capacitor or the second auxiliary rechargeable energy storage device as soon as the voltage at the power input node of the PMC exceeds the voltage of the second buffer node by at least a predetermined value. The predetermined value is preferably equal or close to 0V. The fifth portion of the input power is prevented from flowing back to the energy harvester when the voltage at the power input node of the PMC is lower than that of the second buffer node.

This allows for storing energy at an early stage (even during the cold-start phase, and before the main voltage converter starts converting power) when the energy harvester starts supplying the input power, and for releasing it later to the load when the energy harvester provides too few or no input power anymore.

The PMC may comprise one or more power input nodes (or terminals) of the PMC for connecting to the energy harvester. Each of the one or more nodes may be connected to the energy harvester directly or through other components such as the power conditioning circuit. For example, the main voltage converter is connected to a first one of the one or more power input nodes of the PMC, either directly or through other components such as the first buffer node of the PMC comprising the input circuit. For example, the cold-start voltage converter is connected to the first or a second one of the one or more power input nodes of the PMC, either directly or through other components such as the first buffer node of the PMC comprising the input circuit. For example, the step-down voltage converter is connected to the first, the second, or a third one of the one or more power input nodes of the PMC, either directly or through other components such as the first buffer node of the PMC comprising the input circuit. For example, the second buffer node is connected to the first, the second, the third, or a fourth one of the one or more power input nodes of the PMC, either directly or through other components such as the first buffer node of the PMC comprising the input circuit. Preferably, the main voltage converter, the cold-start voltage converter, the step-down voltage converter, and the second buffer node are all connected to the power input node of the PMC (preferably via the first buffer node of the PMC).

As exposed above, the input power received from the energy harvester may be used by different features of the PMC: a first portion of the input power may be absorbed by the main voltage converter (to supply power to the load), a third portion of the input power may be absorbed by the cold-start voltage converter, a second portion of the input power may be absorbed by the step-down voltage converter, a fifth portion of the input power may be absorbed by the second buffer node, and a fourth portion of the input power may be absorbed by the main voltage converter (to supply power to the controller). Similarly, the load output power supplied by the PMC to the load comprises:

- a first portion of the load output power resulting from the conversion of the first portion of the input power by the PMC (in particular, by the main voltage converter), and
- a second portion of the load output power resulting from the conversion of the fifth portion of the input power (previously stored in the second integrated on-chip capacitor or in the second auxiliary rechargeable energy storage device through the second buffer node) by the PMC (in particular, by the main voltage converter).

In an embodiment of the invention, the load node is a load terminal. In an embodiment of the invention, the power input node of the PMC is an input terminal.

According to a second aspect, the invention also provides an energy harvesting system comprising:

- a PMC according to the first and/or fourth aspect of the invention,
- optionally a rectifier, more preferably an active rectifier,
- an energy harvester for supplying an input power and connected to the power input node of the PMC, preferably through the rectifier,

- optionally a first auxiliary rechargeable energy storage device, such as a first buffer capacitor, connected to the first buffer node of the PMC,
- optionally a second auxiliary rechargeable energy storage device, such as a second buffer capacitor, connected to the second buffer node of the PMC,
- a load connected to the load node of the PMC, the load being preferably an application load.

Preferably, the load comprises an electronic circuit, preferably a wireless transmitter.

According to a third aspect, the invention provides a method for managing an input power from a single energy harvester and comprising steps of:

- providing a main voltage converter having a power input node for receiving a first portion of the input power from the energy harvester, and configured for converting the first portion of the input power at a voltage Vin1 of the power input node of the main voltage converter into a first portion of a load output power at a voltage Vload supplied to the load node, the main voltage converter being configured for converting the first portion of the input power at the voltage Vin1 into the first portion of the load output power at the voltage Vload when Vin1 ≥ VLoad and/or when Vin1 < VLoad,
- connecting the power input node of the main voltage converter to the energy harvester,
- connecting the load node to a load,
- providing a controller configured for controlling the main voltage converter, wherein the controller is operable for controlling the main voltage converter if a supply voltage Vint at a power input node of the controller is equal or above a minimum required supply voltage Vint_min (Vint ≥ Vint_min),
- providing a biasing circuit operable for converting part of the input power from the energy harvester into part of a controller input power at the voltage Vint supplied to the power input node of the controller at least when Vint = Vint_min,
- connecting the biasing circuit to the energy harvester and to the power input node of the controller,

characterized in that the method comprises steps of:

- providing a step-down voltage converter distinct from the biasing circuit and having a power input node for receiving a second portion of the input power from the energy harvester, the step-down voltage converter being configured for converting the second portion of the input power at a voltage Vin2 of the power input node of the step-down voltage converter into a first portion of the controller input power at the voltage Vint supplied to the power input node of the controller if and only if Vin2 ≥ Vint and Vint ≤ Vint_min,
- connecting the power input node of the step-down voltage converter to the energy harvester,
- connecting a power output node of the step-down voltage converter to the power input node of the controller,

the method further comprising steps of:

- upon reception of the input power from the energy harvester:
- with the step-down voltage converter and if and only if Vin2 ≥ Vint and Vint ≤ Vint_min, converting the second portion of the input power into the first portion of the controller input power such that Vint increases up to Vint_min, and
- upon Vint reaches Vint_min:
- interrupting the supply of the first portion of the controller input power to the controller,
- operating the biasing circuit of the PMC to supply the second portion of the controller input power to the controller.

Preferably, in the method according to the third aspect of the invention, the main voltage converter, the controller, the biasing circuit, and the step-down voltage converter are comprised in a PMC according to the first aspect of the invention.

Preferably, the method is performed with the PMC comprising the main voltage converter and the cold-start voltage converter as described in the first aspect of the invention. In this case, the method comprises steps of:

- upon Vint reaches Vint_min:

  ∘ operating the controller to control the main voltage converter such that the main voltage controller starts converting a fourth portion of the input power at the voltage Vin1 of the power input node of the main voltage converter into a third portion of the controller input power at the voltage Vint supplied to the power input node of the controller, the main voltage converter being preferably configured for regulating Vint such that Vint = Vint_min,

- upon the main voltage converter starts supplying the third portion of the controller input power to the controller:

  ◦ interrupting the supply of the second portion of the controller input power to the controller by the cold-start voltage converter.

Preferably, the PMC of the method comprises the second buffer node described in the first aspect of the invention and the method further comprises steps of:

- if the main voltage converter is receiving the first portion of the input power from the energy harvester:

  ◦ with the main voltage converter, converting the first portion of the input power into the first portion of the load output power,
  ◦ preventing a conversion of power received from the second buffer node into the second portion of the load output power by the main voltage converter,

- upon interruption of the supply of the first portion of the input power to the main voltage converter:

  ◦ with the main voltage converter, converting power received from the second buffer node into the second portion of the load output power by the PMC.

Preferably, the method uses a PMC according to the first aspect of the invention.

Preferably, the main voltage converter receives the first portion of the input power from the energy harvester through the input circuit.

The method optionally comprises the steps of connecting a first auxiliary rechargeable energy storage device, such as a first buffer capacitor, to the first buffer node of the PMC.

The method optionally comprises the steps of connecting a second auxiliary rechargeable energy storage device, such as a second buffer capacitor, to the second buffer node of the PMC.

The method preferably comprises connecting the load to the load node of the PMC.

The features of the PMC according to the first aspect of the invention may be introduced in the energy harvesting system according to the second aspect of the invention, or introduced in the method according to the third aspect of the invention.

The effects and advantages of the PMC according to the first aspect of the invention apply mutatis mutandis to the energy harvesting system according to the second aspect of the invention and to the method according to the third aspect of the invention.

According to a fourth aspect, the invention provides a power management circuit (PMC), preferably a power management integrated circuit (PMIC), for managing an input power from an energy harvester and comprising:

- an power input node for receiving the input power from the energy harvester,
- a load node connectable to a load,
- a main voltage converter having a power input node for receiving a first portion of the input power from the energy harvester, and configured for converting the first portion of the input power at a voltage $Vin1$ of the power input node of the main voltage converter into a first portion of a load output power at a voltage $Vload$ supplied to the load node, the main voltage converter being configured for converting the first portion of the input power at the voltage $Vin1$ into the first portion of the load output power at the voltage $Vload$ when

$$Vin1 \geq VLoad \text{ and/or when } Vin1 < VLoad,$$

- a controller configured for controlling the main voltage converter, wherein the controller is operable for controlling the main voltage converter if a supply voltage $Vint$ at a power input node of the controller is equal or above a minimum required supply voltage

$$Vint\_min \ (Vint \geq Vint\_min),$$

- a biasing circuit operable for converting part of the input power from the energy harvester into part of a controller input power at the voltage $Vint$ supplied to the power input node of the controller at least when

$$Vint = Vint\_min,$$

- a second buffer node connected to a second integrated on-chip capacitor or connectable to a second auxiliary rechargeable energy storage device, the main voltage converter being operable for converting power received from the second buffer node into a second portion of the load output power at the voltage Vload supplied to the load node,

characterized in that the PMC comprises:

- a second unidirectional conducting device, preferably a second ideal diode, having a first terminal connected to the second buffer node and a second terminal connected to the power input node, the second terminal being configured for receiving a fifth portion of the input power from the energy harvester through the power input node, wherein the second unidirectional conducting device is configured for preventing current from flowing from the first to the second terminal of the second unidirectional conducting device, and for allowing current to flow from the second to the first terminal of the second unidirectional conducting device,

and in that the second terminal of the second unidirectional conducting device is connected to the power input node via a connecting circuit separate from the main voltage converter.

Thanks to the second unidirectional conducting device connected between the energy harvester and the second integrated on-chip capacitor or the second auxiliary rechargeable energy storage device, such PMC allows for storing the energy available from the energy harvester before the main voltage converter starts operating and converting the first portion of the input power into the first portion of the load output power. In the prior art PMC, the energy available from the energy harvester before the main voltage converter starts operating is lost.

In the PMC, when the main voltage converter is not converting power yet and the voltage at the power input node of the PMC is greater than the voltage of the second integrated on-chip capacitor or the second auxiliary rechargeable energy storage device, the current may flow from the energy harvester to the second integrated on-chip capacitor or the second auxiliary rechargeable energy storage device, respectively, without passing through the main voltage converter.

In other words, the second buffer node is connected to the power input node of the PMC through a circuit comprising the second unidirectional conducting device and that is separate from the main voltage converter.

The PMC is configured such that current flowing from the second to the first terminal of the second unidirectional conducting device avoids flowing through the main voltage converter.

Preferably, the PMC comprises an input circuit comprising:

- the power input node,
- a first buffer node connected to a first integrated on-chip capacitor or connectable to a first auxiliary rechargeable energy storage device, the first buffer node being connected to:

  ◦ the power input node through a first unidirectional conducting device, and
  ◦ a power input node of the step-down voltage converter,

- the first unidirectional conducting device, preferably a first ideal diode, configured for preventing current from flowing from the first buffer node to the power input node and for allowing current to flow from the power input node to the first buffer node.

Preferably, the second terminal of the second unidirectional conducting device is connected to the power input node through the first buffer node. In this way, the fifth portion of the input power is received by the second buffer node via the first buffer node.

Each combination of the features of the PMC according to the first aspect of the invention may be introduced in the PMC according to the fourth aspect of the invention.

The PMC according to the fourth aspect of the invention is identical to the PMC according to the first aspect of the invention described in the present application (i.e., to all the embodiments of the PMC according to the first aspect of the invention described in the present application), except in that it does not comprise the step-down voltage converter.

The effects and advantages of the PMC according to the first aspect of the invention apply mutatis mutandis to the PMC according to the fourth aspect of the invention.

**Brief description of the figures**

For a better understanding of the present invention, reference will now be made, by way of example, to the accompanying drawings in which:

- Figure 1 schematically illustrates an embodiment of the PMC according to the invention, connected to an energy harvester and a load to form an energy harvesting system according to the invention.
- Figure 2 schematically illustrates an embodiment of input circuit for use in a PMC according to the invention.
- Figure 3 schematically illustrates an embodiment of the second unidirectional conducting device and of the second energy storage device connected to the second buffer node in a PMC according to the invention.
- Figure 4 illustrates an embodiment of step-down voltage converter for use in a PMC according to the invention.
- Figure 5 illustrates a graph of voltages as a function of time at various nodes or terminals of the PMC according to an embodiment of the invention, upon starting to receive input power from the energy harvester.

**Description of the invention**

The present invention is described with respect to particular embodiments and with reference to certain drawings but the invention is not limited thereto. The drawings described are only schematic and are nonlimiting. In the drawings, the size of some of the elements may be exaggerated and not drawn on scale for illustrative purposes. On the figures, identical or analogous elements may be referred by a same number.

Furthermore, the terms first, second, third, fourth and the like in the description and in the claims, are used to distinguish between similar elements and not necessarily to describe a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

Harvesting random energy pulses from sources is becoming popular in various applications as kinetic or piezoelectric energy harvesters are becoming available. Applications like lighting control, wall switches, emergency break, leakage detectors, door control access, release detection, and step detection, can benefit from powering by energy harvesters. Pulsed energy is characterized by very brief pulses (milliseconds) of high power (watts) that requires specific configurations and circuitry for being used as energy source. For instance, in order to be exploited by a Power Management Circuit (PMC), the PMC has to start as fast as the pulse occurs. In addition, protection must be designed to avoid destruction of the PMIC because of overvoltage's. For example, the duration of each pulse of input power from the energy harvester is comprised between 1ms and 100ms, preferably between 2ms and 20ms, more preferably between 3ms and 10ms.

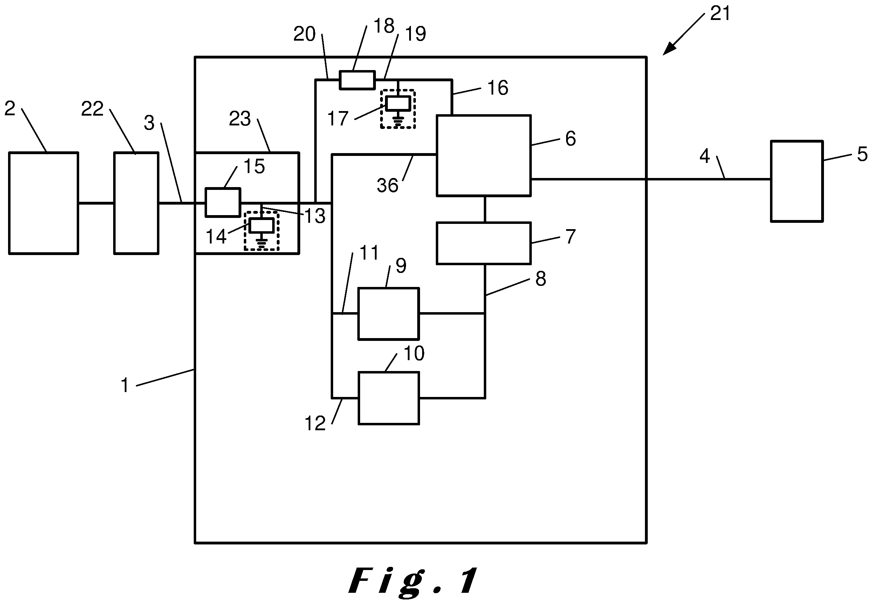

Figure 1 illustrates schematically an embodiment of a power management circuit (PMC) 1 according to the invention, for managing an input power from an energy harvester 2. The PMC 1 is part of an energy harvesting system 21 formed by the energy harvester 2, the power conditioning circuit 22, e.g., an active rectifier, the PMC 1, and the load 5. The energy harvester 2 may supply pulsed input power i.e., pulses of input power separated by powerless periods. In such case, the PMC receives the input power from the energy harvester only during the pulses i.e., intermittently. The energy of each pulse may be oscillating i.e., provided under an oscillating voltage.

For example, the voltage of each pulse is similar to that of a damped resonance. In that case, the voltage oscillates and the amplitude of the oscillations decrease over time until the voltage reaches the value 0 at the end of each pulse. For example, each pulse lasts during 2 and 100 times the pseudo-period of the oscillations, preferably during 3 and 20 times the pseudo-period of the oscillations.

For example, the maximum amplitude of the oscillations is comprised between 10V and 100V, preferably between 10V and 30V. For example, the duration of a pulse is comprised between 40ms and 1s, more preferably between 60ms and 400ms.

For example, each pulse comprises between 100μJ and 100mJ of energy, preferably between 5mJ and 50mJ of energy.

In Figure 1, the energy harvester 2 is connected to the power input node 3 of the PMC via a power conditioning circuit 22. The power conditioning circuit is an active rectifier such that the voltage at the power input node 3 of the PMC has a single polarity.

The PMC comprises an input circuit 23 comprising the power input node 3 of the PMC 1. The input circuit 23 comprises an ideal diode 15 connected to the power input node 3 and the first buffer node 13, and preventing the current from flowing back from the first buffer node 13 to the input circuit 23. The capacitor 14 is connected in parallel with the energy harvester and rectifier, whereas the ideal diode 15 is connected is series with the energy harvester 2 and rectifier 3. The first buffer node 13 is connected to a first auxiliary rechargeable energy storage device 15 that is a capacitor.

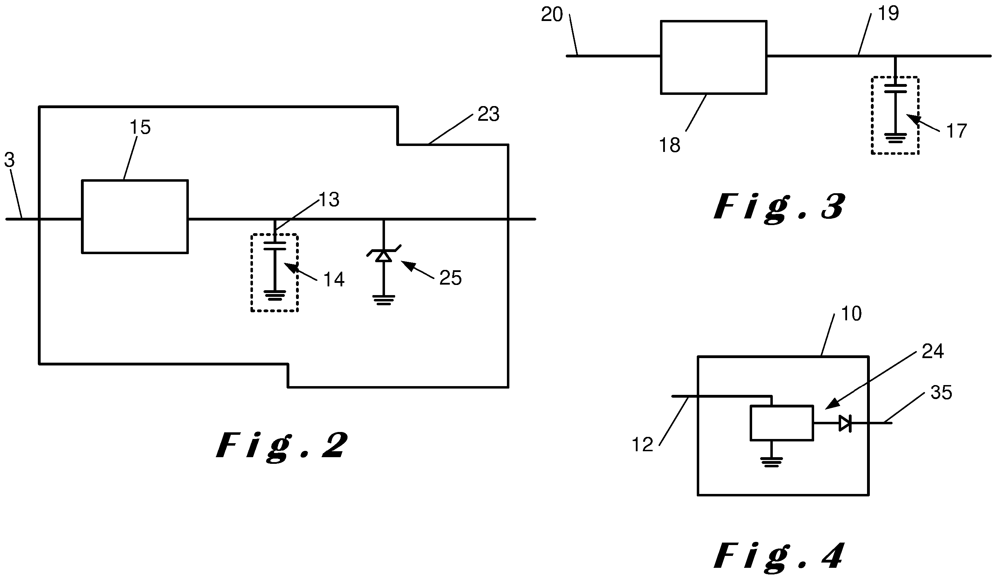

A more detailed schematic view of the input circuit 23 is illustrated in Figure 2. It shows the ideal diode 15 connected in series with the power input node 3, and the first auxiliary rechargeable energy storage device 14 being a capacitor or a supercapacitor and connected in parallel with the power input node to buffer the input power from the power input node 3.

Preferably, the input circuit 23 further comprises a Zener diode 25 for limiting a voltage at the power input node 36 of the main voltage converter 6, at the power input node 11 of the cold-start voltage converter 9, and at the power input node 12 of the step-down voltage converter 10 of the PMIC. This protects the PMIC from voltage surges. For example, the reverse voltage (also usually referred to as the Zener voltage) of the Zener diode 25 is 5V. The Zener diode 25 may be replaced by any voltage limiting device. The Zener diode 25 is connected to the first buffer node 13, in parallel with the capacitor 14.

As shown in Figure 1, a supply output of the input circuit 23 has the same voltage as the first buffer node 13 and is connected to various modules of the PMC 1, namely to the power input node 36 of the main voltage converter 6, to the power input node 11 of the cold-start voltage converter 9, to the power input node 12 of the step-down voltage converter 10, and to the second terminal 20 of the second unidirectional conducting device 18. Each of these modules can receive a portion of the input power received from the energy harvester through the power conditioning circuit 22 and the input circuit 23.

The main voltage converter 6 is operable for converting a first portion of the input power into a first portion of the load output power. The load output power comprises the first and second portions of the load output power and is supplied to the load via the load node 4. The main voltage converter has a power output node connected to the load 5 via the load node 4. The main voltage converter comprises a DC-DC voltage converter, preferably a buck-boost. The main voltage converter converts most of the energy contained in a pulse of energy received from the energy harvester into the first portion of the load output power. However, the main voltage converter only starts converting power upon being controlled by the controller. Thus, upon reception of a new pulse of the input power from the energy harvester 2, the main voltage converter 6 cannot start supplying power to the load before the controller starts operating.

A controller 7 of the PMC is configured for controlling the main voltage converter 6. The controller is connected to the main voltage converter. The controller 7 is supplied with power by its power input node 8 connected to the cold-start voltage converter 9 and to the step-down voltage converter 10. In an embodiment, the controller 7 is configured for controlling the main voltage converter 6 such that the voltage Vload at the load node 4 is steady and equal to 1.8V, while the voltage at the power input node of the main voltage converter varies according to the voltage at the first buffer node 13.

For the controller to start operating and thus controlling the main voltage converter, the bias voltage of the controller must reach a minimum required supply voltage Vint_min. In other words, the supply voltage Vint supplied at the power input node 8 of the controller 7 must be above Vint_min. As the circuits connected to the power input node 8 must be charged for Vint to rise from 0V to Vint_min, there exists a time delay for Vint to reach Vint_min. In an example, Vint is the bias voltage of the entire PMC.

In figure 1, the cold-start voltage converter 9 receives the third portion of the input power from the energy harvester and converts it into a second portion of the controller input power supplied to the power input node 8 of the controller 7. The step-down voltage converter 10 receives the second portion of the input power received from the energy harvester 2 into a first portion of the controller input power supplied to the power input node 8 of the controller 7. The cold-start voltage converter 9 and the step-down voltage converter 10 both supply power to the controller but differ in that the step-down voltage converter 10 has a lower conversion efficiency and a higher output power than the cold-start voltage converter 9.

Upon starting to receive the input power from the energy harvester, the step-down voltage converter 10 starts operating and supplying power to the power input node of the controller so that Vint rises and reaches Vint_min fast. During this cold-start phase, the cold-start voltage converter 9 preferably also supplies power to the power input node such that Vint rises even faster. The higher the controller input power supplied to the power input node 8 of the controller 7 when Vint < Vint_min, the shorter the cold-start phase of the PMC, and the faster the main voltage converter starts converting the first portion of the input power and supplying the load output power.

In the invention, the addition of the step-down voltage converter thus allows for a faster cold-start of the PMC. Despite the low energy efficiency of the power conversion by the step-down voltage converter, the overall energy efficiency of the PMC is improved. Thanks to the shorter cold-start phase, the PMC starts absorbing power from the energy harvester to supply the load earlier. The additional amount of the first portion of the input power that is converted by the main voltage converter thanks to the earlier cold-start of the PMC (i.e., thanks to the presence of the step-down voltage converter) would otherwise be left unabsorbed by the PMC and/or the load, and be lost.

After the cold-start phase, the charging of the circuit of the controller and/or PMC connected to the power input node of the controller is over, and the second portion of the controller input power supplied by the cold-start voltage converter suffices to maintain Vint ≥ Vint_min and allow operation of the PMC. Upon Vint reaches Vint_min, the step-down voltage converter stops supplying the first portion of the controller input power to the power input node. The cold-start voltage converter keeps supplying power to the power input node after Vint reaches Vint_min. This maximizes energy efficiency.

A detailed schematical view of the step-down voltage converter 10 is shown in Figure 4. The step-down voltage converter 10 has the power input node 12 connectable to the first buffer node 13 and the power output node 35 connectable to the power input node 8 of the controller 7. Typically, the step-down voltage converter 10 comprises a low-dropout regulator (LDO) 24 in series between the supply input 12 and the supply output 25. The LDO is preferably connected to the power output supply 25 of the step-down voltage converter through a diode for avoiding back-flow current from the power input node 8 to the LDO 24. The LDO 24 has the advantage of being implementable in an integrated circuit.

For example, Vint_min is equal to a constant such as 2.2V, the step-down voltage converter is configured for supplying the first portion of the controller input power while Vint ≤ Vint_min. Preferably the cold-start voltage converter is configured for regulating Vint such that Vint = Vint_min and Vint is steady.

After the controller receives the controller input power at the voltage Vint ≥ Vint_min, it starts operating and controlling the main voltage converter. Following this, the main voltage converter 6 starts converting the first portion of the input power from the energy harvester into the load output power. The main voltage converter 6 also starts converting a fourth portion of the input power from the energy harvester into a third portion of the controller input power. Upon the main voltage converter starts supplying the third portion of the controller input power to the power input node of the controller, the PMC is configured such that the cold-start voltage converter stops supplying the second portion of the controller input power to the controller. From this time, the controller is supplied with power by the main voltage converter only, not anymore by the step-down voltage converter and the cold-start voltage converter.

To absorb and store even more of the input power from the energy harvester before the cold-start phase is over, the PMC 1 may comprise a second buffer node 16. The second buffer node 16 is connected to a second on-chip capacitor or to a second auxiliary rechargeable energy storage device 17 such as a supercapacitor, and to the power input node 3 of the PMC 1 via a second unidirectional conducting device 18 as shown in Figure 1. A more detailed schematic view of these components is in Figure 3. The second unidirectional conducting device 18 is an ideal diode allowing the current to flow from the power input node of the PMC to the second auxiliary rechargeable energy storage device 17. Upon starting to receive the input power from the energy harvester, a fifth portion of the input power is stored immediately in the second auxiliary rechargeable energy storage device 17. This allows to store energy from the energy harvester before the end of the cold-start phase, which otherwise would be lost. The stored energy is later converted into a second portion of the load output power by the PMC. Thus, such second 'buffering' of energy allows for storing energy in applications wherein the energy harvester supplies the input power in pulses having a higher amplitude and a shorter duration whereas the load requires a power supply of comparatively lower amplitude and longer duration.

The energy from the energy harvester may be stored quickly in the second integrated on-chip capacitor or the second auxiliary rechargeable energy storage device 17 because it is not converted, for example by a voltage converter such as the main voltage converter.

Preferably, the PMC is configured such that:

- the energy stored in the second integrated on-chip capacitor or in the second auxiliary rechargeable energy storage device is not converted into the second portion of the load output power by the PMC if the first portion of the input power converted by the main voltage converter into the first portion of the load output power is sufficient for maintaining the voltage Vload above a minimum required voltage of the load (i.e., a minimum voltage required for the load to operate),
- if the first portion of the input power is too low for the main voltage converter to supply the first portion of the load output power and maintain the voltage Vload above the minimum required voltage of the load, starting converting the energy stored in the second integrated on-chip capacitor or in the second auxiliary rechargeable energy storage device into the second portion of the load output power (such conversion being made by the main voltage converter).

The PMC 1 illustrated in Figure 1 is an integrated circuit i.e., a PMIC. However, the capacitor 14 and the capacitor 17 are not integrated in the PMIC, as indicated by the rectangle in dashed lines surrounding them. This allows for using supercapacitors for storing more energy than with on-chip capacitors.

In an example, the load consumes a steady current of between 1mA and 50mA or between 3mA and 10mA, and under a steady current of between 0.5V and 10V, more preferably between 1V and 5V.

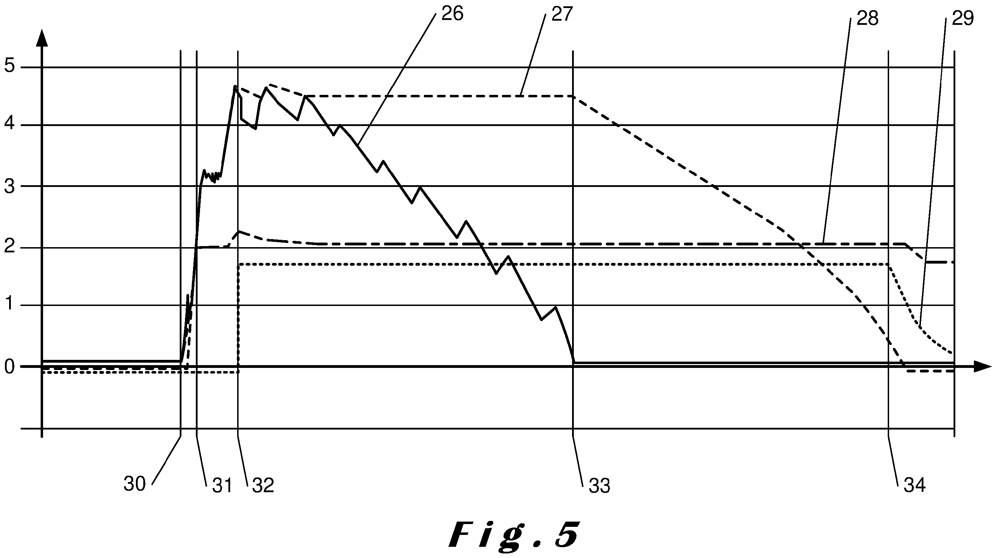

Figure 5 illustrates a graph (voltage 0-5V as a function of time 0-400ms) of voltages at various node in the PMC according to Figure 1.

Figure 1 represents: the voltage 26 at the first buffer node 13, the voltage 27 at the second buffer node 19, the voltage Vint 28, and the voltage Vload 29. The cold-start phase lasts between time 30 (when the energy harvester starts generating the input power of the PMC) and time 31 (when Vint 28 reaches Vint_min ~ 2.2V). At time 31, the controller starts operating and controlling the main voltage converter 6, which starts converting the first portion of the input power and supplying the first portion of the load output power to the load 5 at the voltage Vload 29 at time 32. At time 33, the energy harvester has stopped supplying power to the PMC and the first integrated on-chip capacitor or the first auxiliary rechargeable energy storage device 14 connected to the first buffer node 13 is depleted of energy. Thus, the PMC starts converting power from the second integrated on-chip capacitor or the second auxiliary rechargeable energy storage device 17 connected to the second buffer node 19 to supply it to the load 5, until the second integrated on-chip capacitor or the second auxiliary rechargeable energy storage device 17 (respectively) are depleted of energy.

Before time 30, the PMC is depleted of energy. Its circuits are in a powered-off mode and no internal source of energy may supply the PMC. The load is also depleted of energy.

At time 30, the energy harvester starts harvesting energy. The energy harvester starts supplying the input power to the PMC at an oscillating voltage, the amplitude of the oscillations decreasing with time. The power generated by the energy harvester is rectified by an active rectifier such that the input power received by the PMC has a single polarity.

The input power received by the PMC via the power conditioning circuit 22 is immediately absorbed and stored, without power conversion, in:

- the second integrated on-chip capacitor or the second auxiliary rechargeable energy storage device 17 connected to the second buffer node 19, such that the voltage 27 rises, and in
- the first integrated on-chip capacitor or the first auxiliary rechargeable energy storage device 14 connected to the first buffer node 13, such that the voltage 26 rises.

This occurs even before the end of the PMC cold-start phase at time 31 and before the main voltage converter starts operating and supplying the first portion of the load output power at time 32. In Figure 5, the energy absorbed between times 30 and 32 would be lost in absence of the first and second buffer nodes with the energy storages means connected thereto. The energy stored in this way is prevented from back-flowing to the energy harvester and remains stored in the PMC for later use.

This is due to the first unidirectional conducting device 15 and the second unidirectional conducting device 18. Thanks to the latter's, the voltages of the capacitors connected to the first and second buffer nodes rises simultaneously with the voltage at the power input node 3 of the PMC, and do not decrease (or only slightly due to internal losses) with the voltage at the power input node of the PMC, for example between two oscillation peaks. The energy stored in the capacitors connected to the first and second buffer nodes keeps increasing between times 30 and 32 i.e., until the main voltage converter starts supplying the load output power at the voltage Vload.

Starting from time 30, the step-down voltage converter 10 (e.g., the LDO) sees the voltage 26 at its supply input 12 and starts supplying a high current to the power input node of the controller 7 such that the voltage Vint 28 rises and reaches Vint_min ~ 2.2V at time 31. The cold-start voltage converter also supplies the second portion of the controller input power to the controller.

Upon Vint reaches Vint_min at time 31, the circuits connected to the power input node 8 are charged such that less current or power is needed for the controller to operate. At time 31, the step-down voltage converter stops supplying the first portion of the controller input power to the power input node of the controller. When the step-down voltage converter is a LDO, this interruption occurs automatically as the LDO output voltage is set at the value Vint_min and the power input node is a high impedance node when Vint = Vint_min. As a result, the current supplied by the LDO drops sharply upon Vint reaches Vint_min, such that the LDO stops operating and supplying power to the power input node 8 at time 31.

After time 31, the cold-start voltage converter keeps supplying the second portion of the controller input power such that the controller 7 starts operating and controlling the main voltage converter 6. Starting operation of the main voltage converter takes some time (from time 31 to time 32), such that Vload rises up to 1.8V at time 32 only. During this time, the main voltage converter is not yet converting power and cannot supply the controller.

At time 32, the main voltage converter 6 enters operation and starts converting the first portion of the input power from the energy harvester into the first portion of the load output power. As the input power decreases over time, the load output power may be greater than the total input power from the energy harvester, such that the main voltage converter also absorbs some of the energy stored in the first integrated on-chip capacitor or the first auxiliary rechargeable energy storage device 14 connected to the first buffer node 13 to compensate. This causes the voltage 26 at the first buffer node 13 to start decreasing with time. The main voltage converter 6 keeps drawing energy from the energy harvester and the first integrated on-chip capacitor or the first auxiliary rechargeable energy storage device 14 connected to the first buffer node 13, until the energy harvester stops supplying the input power and the first integrated on-chip capacitor or the first auxiliary rechargeable energy storage device 14 are depleted of energy, such that the voltage 26 at the first buffer node 13 cancels out at time 33.

From time 32, the main voltage converter also starts converting a fourth portion of the input power from the energy harvester into a third portion of the controller input power. At time 32, the cold-start voltage converter also stops operating, such that the second portion or the controller input power is not supplies to the controller anymore.

Before time 33, the PMC is preferably configured for not drawing energy from the second buffer node 16 (connected to the second integrated on-chip capacitor or to the second auxiliary rechargeable energy storage device 17). In this way, the PMC 1 prioritizes the consumption of energy from the energy harvester and/or the energy stored in the input circuit.

Once other sources of energy are not available, the PMC is configured for starting to draw energy from the second buffer node, and thus from the second integrated on-chip capacitor or to the second auxiliary rechargeable energy storage device 17, such that the voltage 27 of the second buffer node 19 starts decreasing. The energy from the second integrated on-chip capacitor or from the second auxiliary rechargeable energy storage device 17 is converted by the PMC 1 into a second portion of the load output power at the voltage Vload 29 which remains steady until the second integrated on-chip capacitor or the second auxiliary rechargeable energy storage device 17 are depleted of energy at time 34. Then, the PMC cannot supply power to the load anymore such that Vload 29 drops. Vint 28 also drops as no energy is available for the biasing of the PMC anymore. Thus, the PMC 1 evolves towards a powered-off state until a next pulse of input power occurs.

According to an aspect, the invention discloses a power management circuit (PMC) 1, preferably a power management integrated circuit (PMIC), for managing an input power from an energy harvester 2 and comprising:

- an power input node 3 for receiving the input power from the energy harvester 2,
- a load node 4 connectable to a load 5,
- a main voltage converter 6 having a power input node 36 for receiving a first portion of the input power from the energy harvester 2, and configured for converting the first portion of the input power at a voltage Vin1 of the power input node of the main voltage converter 6 into a first portion of a load output power at a voltage Vload supplied to the load node 4, the main voltage converter 6 being configured for converting the first portion of the input power at the voltage Vin1 into the first portion of the load output power at the voltage Vload when $Vin1 \geq VLoad$ and/or when $Vin1 < VLoad$,
- a controller 7 configured for controlling the main voltage converter 6, wherein the controller 7 is operable for controlling the main voltage converter 6 if a supply voltage Vint at a power input node 8 of the controller 7 is equal or above a minimum required supply voltage Vint_min ($Vint \geq Vint\_min$),
- a biasing circuit operable for converting part of the input power from the energy harvester 2 into part of a controller input power at the voltage Vint supplied to the power input node 8 of the controller 7 at least when Vint = Vint_min,
- a second buffer node 16 connected to a second integrated on-chip capacitor or connectable to a second auxiliary rechargeable energy storage device 17, the main voltage converter 6 being operable for converting power received from the second buffer node 16 into a second portion of the load output power at the voltage Vload supplied to the load node 4.

The PMC further comprises a second unidirectional conducting device 18, preferably a second ideal diode, having a first terminal 19 connected to the second buffer node 16 and a second terminal 20 connected to the power input node 3, the second terminal 20 being configured for receiving a fifth portion of the input power from the energy harvester through the power input node 3.

The second unidirectional conducting device 18 is configured for preventing current from flowing from the first 19 to the second 20 terminal of the second unidirectional conducting device 18, and for allowing current to flow from the second 20 to the first 19 terminal of the second unidirectional conducting device 18.

The second terminal 20 of the second unidirectional conducting device 18 is connected to the power input node 3 via a connecting circuit separate from the main voltage converter 6.

The PMC preferably comprises an input circuit 23 comprising:

- the power input node 3,
- a first buffer node 13 connected to a first integrated on-chip capacitor or connectable to a first auxiliary rechargeable energy storage device 14, the first buffer node 13 being connected to:

    ◦ the power input node 3 through a first unidirectional conducting device 15, and
    ◦ ia power input node 12 of the step-down voltage converter 10,

- the first unidirectional conducting device 15, preferably a first ideal diode, configured for preventing current from flowing from the first buffer node 13 to the power input node 3 and for allowing current to flow from the power input node 3 to the first buffer node 13.

The second terminal 20 of the second unidirectional conducting device 18 is preferably connected to the power input node 3 through the first buffer node 13.

The invention may also be summarized as follows. The present invention relates to a method and apparatus for accelerating a cold-start of a power management circuit PMC 1 for managing an input power from an energy harvester 2. The PMC 1 comprises: a main voltage converter 6 for converting input power from the energy harvester 2 into a load output power, a controller 7 for controlling the main voltage converter 6 and operable if supplied by a supply voltage Vint of at least Vint_min (Vint $\geq$ Vint_min), a biasing circuit for converting part of the input power from the energy harvester 2 and supplying power to the controller 7 at least when Vint = Vint_min, a step-down voltage converter 10 configured for converting energy supplied by the energy harvester at a voltage Vin and for supplying power to the controller 7 if and only if Vin $\geq$ Vint and Vint $\leq$ Vint_min. Upon starting to receive energy from the energy harvester 2, the PMC 1 is configured such that: i) while Vint $\leq$ Vint_min, the step-down voltage converter 10 supplies power to the controller 7 such that Vint increases up to Vint_min; and ii) upon Vint reaches Vint_min, the step-down voltage converter 10 interrupts the supply of power to the controller 7, and the biasing circuit supplies power to the controller 7.

The step-down voltage converter 10 is more powerful but converts energy less efficiently than the biasing circuit.

Although the present invention has been described above with respect to particular embodiments, it will readily be appreciated that other embodiments are also possible.

## Claims

1. A power management circuit (PMC) (1), preferably a power management integrated circuit (PMIC), for managing an input power from an energy harvester (2) and comprising:

   • an power input node (3) for receiving the input power from the energy harvester (2),
   • a load node (4) connectable to a load (5),
   • a main voltage converter (6) having a power input node (36) for receiving a first portion of the input power from the energy harvester (2), and configured for converting the first portion of the input power at a voltage Vin1 of the power input node of the main voltage converter (6) into a first portion of a load output power at a voltage Vload supplied to the load node (4), the main voltage converter (6) being configured for converting the first portion of the input power at the voltage Vin1 into the first portion of the load output power at the voltage Vload when Vin1 $\geq$ VLoad and/or when Vin1 < VLoad,
   • a controller (7) configured for controlling the main voltage converter (6), wherein the controller (7) is operable for controlling the main voltage converter (6) if a supply voltage Vint at a power input node (8) of the controller (7) is equal or above a minimum required supply voltage Vint_min (Vint $\geq$ Vint_min),
   • a biasing circuit operable for converting part of the input power from the energy harvester (2) into part of a controller input power at the voltage Vint supplied to the power input node (8) of the controller (7) at least when Vint = Vint_min,
   **characterized in that** the PMC (1) comprises:

   • a step-down voltage converter (10), distinct from the main voltage converter and from the biasing circuit, and having a power input node (12) for receiving a second portion of the input power from the energy harvester (2), the step-down voltage converter (10) being configured for converting the second portion of the input power at a voltage Vin2 of the power input node (12) of the step-down voltage converter (10) into a first portion of the controller input power at the voltage Vint supplied to the power input node (8) of the controller (7) if and only if Vin2 $\geq$ Vint and Vint $\leq$ Vint_min,

   **and in that** the PMC (1) is configured for, if Vint $\geq$ Vint_min :

   • interrupting the supply of the first portion of the controller input power to the controller (7), and
   • operating the biasing circuit of the PMC to supply the second portion of the controller input power to the controller (8).

2. The PMC (1) according to the claim 1 wherein:

   • the biasing circuit is a cold-start voltage converter (9), distinct from the main voltage converter (6), and having a power input node (11) for receiving a third portion of the input power from the energy harvester (2), the cold-start voltage converter (9) being configured for converting the third portion of the input power at a voltage Vin3 of the power input node (11) of the cold-start voltage converter (9) into a second portion of the controller input power at the voltage Vint supplied to the power input node (8) of the controller (7), the cold-start voltage converter (9) being preferably configured for regulating the voltage Vint such that Vint = Vint_min.

3. The PMC (1) according to claim 2, wherein the cold-start voltage converter (9) is operable for converting the third portion of the input power into the second portion of the controller input power supplied to the power input node (8) of the controller (7) if Vint $\leq$ Vint_min and Vin3 $\leq$ Vint, preferably if Vint $\leq$ Vint_min and Vin3 < Vint.

4. The PMC (1) according to claim 2 or 3, wherein the cold-start voltage converter (9) and the step-down voltage converter (10) are configured such that, when Vin3 = Vin2:

   • the first portion of the controller input power is greater than the second portion of the controller input power.

5. The PMC (1) according to any one of the claims 2 to 4, wherein the cold-start voltage converter (9) and the step-down voltage converter (10) are configured such that, when Vin3 = Vin2:

   • a ratio of the first portion of the controller input power to the second portion of the input power is less than a ratio of the second portion of the controller input power to the third portion of the input power.

6. The PMC (1) according to the claim 1 wherein the biasing circuit is the main voltage converter (6), and wherein the main voltage converter (6) is configured for converting a fourth portion of the input power at the voltage Vin1 of the power input node of the main voltage converter (6) into a third portion of the controller input power at the voltage Vint supplied to the power input node (8) of the controller (7) when Vin1 $\leq$ Vint and/or when Vin1 $\geq$ Vint, the main voltage converter (6) being preferably configured for regulating Vint such that Vint = Vint_min.

7. The PMC (1) according to the claim 3 or any one of the claims 4 to 5 when depending on claim 3, and further comprising a main voltage converter (6) configured for converting a fourth portion of the input power at the voltage Vin1 of the power input node of the main voltage converter (6) into a third portion of the controller input power at the voltage Vint supplied to the power input node (8) of the controller (7) when Vin1 $\leq$ Vint and/or when Vin1 $\geq$ Vint, the main voltage converter (6) being preferably configured for regulating Vint such that Vint = Vint_min,
   and wherein the PMC (1) is configured for, upon the main voltage converter starts converting the fourth portion of the input power into the third portion of the controller input power:

   • interrupting the supply of the first portion of the controller input power to the controller (7) by the step-down voltage converter (10), and
   • interrupting the supply of the second portion of the controller input power to the controller (7) by the cold-start voltage converter (9).

8. The PMC (1) according to any one of the previous claims, wherein the step-down voltage converter (10) is a low-dropout (LDO) regulator configured for supplying the first portion of the controller input power at the voltage Vint.

9. The PMC (1) according to any one of the previous claims, further comprising an input circuit (23) comprising:

   • the power input node (3) of the PMC (1),
   • a first buffer node (13) connected to a first integrated on-chip capacitor or connectable to a first auxiliary rechargeable energy storage device (14), the first buffer node (13) being connected to:

     i. the power input node (3) of the PMC (1) through a first unidirectional conducting device (15), and
     ii. a power input node (12) of the step-down voltage converter (10),

   • the first unidirectional conducting device (15), preferably a first ideal diode, configured for preventing current from flowing from the first buffer node (13) to the power input node (3) and for allowing current to flow from the power input node (3) to the first buffer node (13).

10. The PMC (1) according to any one of the previous claims, further comprising:

    • a second buffer node (16) connected to a second integrated on-chip capacitor or connectable to a second auxiliary rechargeable energy storage device (17), the main voltage converter (6) being operable for converting power received from the second buffer node (16) into a second portion of the load output power at the voltage Vload supplied to the load node (4),

• a second unidirectional conducting device (18), preferably a second ideal diode, having a first terminal (19) connected to the second buffer node (16) and a second terminal (20) connected to the power input node (3) of the PMC (1),

wherein the second unidirectional conducting device (18) is configured for preventing current from flowing from the first (19) to the second (20) terminal of the second unidirectional conducting device (18), and for allowing current to flow from the second (20) to the first (19) terminal of the second unidirectional conducting device (18), wherein the second unidirectional conducting device (18) is configured for preventing current from flowing from the first (19) to the second (20) terminal of the second unidirectional conducting device (18), and for allowing current to flow from the second (20) to the first (19) terminal of the second unidirectional conducting device (18), and wherein, if the PMC (1) is according to the previous claim, the second terminal (20) of the second unidirectional conducting device (18) is preferably connected to the power input node (3) of the PMC (1) through the first buffer node (13).

11. An energy harvesting system (21) comprising:

> • a PMC (1) according to any one of the previous claims,
> • optionally a rectifier (22), more preferably an active rectifier,
> • an energy harvester (2) for supplying an input power and connected to the power input node (3) of the PMC (1), preferably through the rectifier (22),
> • optionally a first auxiliary rechargeable energy storage device (14), such as a first buffer capacitor, connected to the first buffer node (13) of the PMC (1),
> • optionally a second auxiliary rechargeable energy storage device (17), such as a second buffer capacitor, connected to the second buffer node (16) of the PMC (1),
> • a load (5) connected to the load node (4) of the PMC (1), the load being preferably an application load.

12. A method for managing an input power from a single energy harvester (2) and comprising steps of:

> - providing a main voltage converter (6) having a power input node (36) for receiving a first portion of the input power from the energy harvester (2), and configured for converting the first portion of the input power at a voltage Vin1 of the power input node of the main voltage converter (6) into a first portion of a load output power at a voltage Vload supplied to the load node (4), the main voltage converter (6) being configured for converting the first portion of the input power at the voltage Vin1 into the first portion of the load output power at the voltage Vload when $Vin1 \geq VLoad$ and/or when Vin1 < VLoad,
> - connecting the power input node (36) of the main voltage converter (6) to the energy harvester (2),
> - providing a controller (7) configured for controlling the main voltage converter (6), wherein the controller (7) is operable for controlling the main voltage converter (6) if a supply voltage Vint at a power input node (8) of the controller (7) is equal or above a minimum required supply voltage Vint_min ($Vint \geq Vint\_min$),
> - providing a biasing circuit operable for converting part of the input power from the energy harvester (2) into part of a controller input power at the voltage Vint supplied to the power input node (8) of the controller (7) at least when Vint = Vint_min,
> - connecting the biasing circuit to the energy harvester (2) and to the power input node (8) of the controller (7), **characterized in that** the method comprises steps of:

>> - providing a step-down voltage converter (10) distinct from the biasing circuit and having a power input node (12) for receiving a second portion of the input power from the energy harvester (2), the step-down voltage converter (10) being configured for converting the second portion of the input power at a voltage Vin2 of the power input node (12) of the step-down voltage converter (10) into a first portion of the controller input power at the voltage Vint supplied to the power input node (8) of the controller (7) if and only if $Vin2 \geq Vint$ and $Vint \leq Vint\_min$,
>> - connecting the power input node (12) of the step-down voltage converter (10) to the energy harvester (2),
>> - connecting a power output node of the step-down voltage converter (10) to the power input node (8) of the controller (7),

> the method further comprising steps of:

>> - upon reception of the input power from the energy harvester (2):

∘ with the step-down voltage converter (10) and if and only if Vin2 ≥ Vint and Vint ≤ Vint_min, converting the second portion of the input power into the first portion of the controller input power such that Vint increases up to Vint_min, and

- upon Vint reaches Vint_min:

∘ interrupting the supply of the first portion of the controller input power to the controller (7),
∘ operating the biasing circuit of the PMC to supply the second portion of the controller input power to the controller (8).

13. The method according to claim 12, wherein the main voltage converter (6), the controller (7), the biasing circuit, and the step-down voltage converter (10) are comprised in a PMC (1) according to any one of the claims 1 to 10.

14. The method according to claim 13, wherein the PMC (1) is according to claim 7 or any one of the claims 8 to 10 when depending on claim 7, the method comprising steps of:

- upon Vint reaches Vint_min:

∘ operating the controller (7) to control the main voltage converter (6) such that the main voltage controller starts converting a fourth portion of the input power at the voltage Vin1 of the power input node of the main voltage converter (6) into a third portion of the controller input power at the voltage Vint supplied to the power input node (8) of the controller (7), the main voltage converter (6) being preferably configured for regulating Vint such that Vint = Vint_min,

- upon the main voltage converter (6) starts supplying the third portion of the controller input power to the controller (8):

∘ interrupting the supply of the second portion of the controller input power to the controller (7) by the cold-start voltage converter (9).

15. The method according to the previous claim wherein the PMC (1) is according to claim 10, and comprising steps of:

- if the main voltage converter (6) is receiving the first portion of the input power from the energy harvester (2):

∘ with the main voltage converter (6), converting the first portion of the input power into the first portion of the load output power,
∘ preventing a conversion of power received from the second buffer node (16) into the second portion of the load output power by the main voltage converter (6),

- upon interruption of the supply of the first portion of the input power to the main voltage converter (6):

∘ with the main voltage converter (6), converting power received from the second buffer node (16) into the second portion of the load output power by the PMC (1).

*Fig. 1*

*Fig. 3*

*Fig. 4*

*Fig. 2*

*Fig.5*

EP 4 773 489 A1

Europäisches
Patentamt

European
Patent Office

Office européen
des brevets

# EUROPEAN SEARCH REPORT

**Application Number**

EP 25 15 0581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/054340 A1 (HAYES ERIC MARTIN [US] ET AL) 26 February 2015 (2015-02-26) | 1,6,8,9, 11-14 | INV. H02M1/00 |
| A | * abstract * <br> * paragraph [0001] - paragraph [0039]; figures 1-6 * | 2-5,7, 10,15 | H02M1/36 <br><br> ADD. H02M1/32 |
| A | CHEN NAN ET AL: "Quick self-start and minimum power-loss management circuit for impact-type micro wind piezoelectric energy harvesters", SENSORS AND ACTUATORS A: PHYSICAL, ELSEVIER BV, NL, vol. 263, 30 May 2017 (2017-05-30), pages 23-29, XP085181830, ISSN: 0924-4247, DOI: 10.1016/J.SNA.2017.05.042 <br> * abstract * <br> * sections 1-4; figures 1-9 * | 1-15 | |
| A | DINI MICHELE ET AL: "A Nanopower Synchronous Charge Extractor IC for Low-Voltage Piezoelectric Energy Harvesting With Residual Charge Inversion", IEEE TRANSACTIONS ON POWER ELECTRONICS, INSTITUTE OF ELECTRICAL AND ELECTRONICS ENGINEERS, USA, vol. 31, no. 2, 1 February 2016 (2016-02-01), pages 1263-1274, XP011670463, ISSN: 0885-8993, DOI: 10.1109/TPEL.2015.2417352 [retrieved on 2015-09-29] <br> * abstract * <br> * sections I-VI; figures 1-19 * | 1-15 | **TECHNICAL FIELDS SEARCHED (IPC)** <br><br> H02M |

The present search report has been drawn up for all claims

| Place of search | Date of completion of the search | Examiner |
|---|---|---|
| The Hague | 20 June 2025 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 0581

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | Publication date | Patent family member(s) | Publication date |
|---|---|---|---|
| US 2015054340 A1 | 26-02-2015 | NONE | |

EPO FORM P0459

For more details about this annex : see Official Journal of the European Patent Office, No. 12/82